# EUROPEAN PATENT SPECIFICATION

(11) **EP 2 776 677 B1**
(45) Date of publication and mention of the grant of the patent: **24.06.2015**
(21) Application number: 12861657.0
(22) Date of filing: 26.12.2012
(51) Int. Cl.: F01D 1/04, F02C 3/107, F02K 3/06

(54) **GAS TURBINE ENGINE**
GASTURBINENMOTOR
MOTEUR À TURBINE À GAZ

(30) Priority: 27.12.2011 US 201113337354; 29.02.2012 US 201261604646 P
(43) Date of publication of application: 17.09.2014
(60) Divisional application: 15166722.7
(73) Proprietor: United Technologies Corporation, Hartford, CT 06101 (US)
(72) Inventor: HASEL, Karl L., Manchester, Connecticut 06040 (US); STAUBACH, Joseph B., Colchester, Connecticut 06415 (US); MERRY, Brian D., Andover, Connecticut 06232 (US); SUCIU, Gabriel L., Glastonbury, Connecticut 06033 (US); DYE, Christohper M., San Diego, California 92117 (US)
(74) Representative: Hull, James Edward
(86) International application number: PCT/US2012/071614
(87) International publication number: WO 2013/101805

(56) References cited:
- EP-A2- 1 340 903
- EP-A2- 2 374 995
- US-A- 4 896 499
- US-A- 6 134 880
- US-A1- 2003 163 983
- US-A1- 2009 074 565
- US-A1- 2009 081 035
- US-A1- 2009 081 035
- US-A1- 2011 167 792
- ZALUD GEARS PUT A NEW SPIN ON TURBOFAN PERFORMANCE 05 November 1998, XP055129882 Retrieved from the Internet: <URL:http://machinedesign.com/article/gears -put-a-new-spin-on-turbofan-performance-110 5> [retrieved on 2013-02-13]

## Description

### BACKGROUND

The present invention relates generally to a gas turbine engine.

Gas turbine engines are known, and typically include a compressor for compressing air and delivering it downstream into a combustion section. A fan may move air to the compressor. The compressed air is mixed with fuel and combusted in the combustion section. The products of this combustion are then delivered downstream over turbine rotors, which are driven to rotate and provide power to the engine.

The compressor includes rotors moving within a compressor case to compress air. Maintaining close tolerances between the rotors and the interior of the compressor case facilitates air compression.

Gas turbine engines may include an inlet case for guiding air into a compressor case. The inlet case is mounted adjacent the fan section. Movement of the fan section, such as during inflight maneuvers, may move the inlet case. Some prior gas turbine engine designs support a front portion of the compressor with the inlet case while an intermediate case structure supports a rear portion of the compressor. In such an arrangement, movement of the fan section may cause at least the front portion of the compressor to move relative to other portions of the compressor.

Disadvantageously, relative movement between portions of the compressor may vary rotor tip and other clearances within the compressor, which can decrease the compression efficiency. Further, supporting the compressor with the inlet case may complicate access to some plumbing connections near the inlet case.

It would be desirable to reduce relative movement between portions of the compressor and to simplify accessing plumbing connection in a gas turbine engine.

Traditionally, a fan and low pressure compressor have been driven in one of two manners. First, one type of known gas turbine engine utilizes three turbine sections, with one driving a high pressure compressor, a second turbine rotor driving the low pressure compressor, and a third turbine rotor driving the a fan. Another typical arrangement utilizes a low pressure turbine section to drive both the low pressure compressor and the fan.

Recently it has been proposed to incorporate a gear reduction to drive the fan such that a low pressure turbine can drive both the low pressure compressor and the fan, but at different speeds.

A prior art turbine engine, having the feature of the preamble of claim 1, is disclosed in US-6134880. Other prior art engines are shown in US-2009/0081035, EP-1340903 and EP-2374995.

### SUMMARY

According to the present invention, there is provided a gas turbine engine as claimed in claim 1.

In an embodiment, the pressure ratio across the low pressure compressor section is between about 4 and about 8.

In another embodiment according to the preceding embodiment, the pressure ratio across the low pressure compressor section is between about 4 and about 6.

In another embodiment according to the foregoing embodiment, a pressure ratio across the high pressure compressor is between about 8 and about 15.

In another embodiment according to the preceding embodiment, the pressure ratio across the high pressure compressor section is between about 8 and about 10.

In another embodiment according to the foregoing embodiment, an overall pressure ratio is above or equal to about 50.

In another embodiment according to the foregoing embodiment, a bypass ratio is defined as a volume of air passing to the bypass duct compared to a volume of air passing into the compressor section and is greater than or equal to about 8.

In another embodiment according to the foregoing embodiment, the turbine section includes a low pressure turbine having 4 or 5 stages, and wherein the low pressure turbine drives the low pressure compressor.

In another embodiment according to the foregoing embodiment, the turbine section includes a two-stage high pressure turbine, and wherein the high pressure turbine drives the high pressure compressor section.

In another embodiment according to the foregoing embodiment, a pressure ratio across the fan section is less than or equal to about 1.45.

### BRIEF DESCRIPTION OF THE DRAWINGS

Figure 1 illustrates a schematic sectional view of an embodiment of a gas turbine engine.
Figure 2 illustrates a sectional view of a prior art compressor case mounting arrangement. Notably, some aspects are not prior art.
Figure 3 illustrates a sectional view of' an example compressor case mounting arrangement of an embodiment of the current invention.
Figure 4 illustrates a close up sectional view of the intersection between an inlet case and a low pressure compressor case in the embodiment of Figure 3.
Figure 5 graphically shows a split in the compression ratios between the low pressure and high pressure compressor sections in a gas turbine engine embodiment.

### DETAILED DESCRIPTION

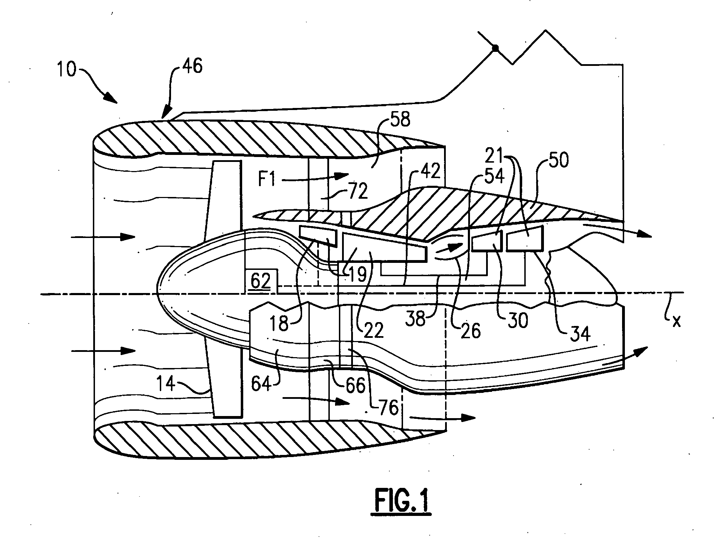

Figure 1 schematically illustrates an example gas turbine engine 10 including (in serial flow communication) a fan section 14, a compressor section 19 that includes a low pressure (or first) compressor section 18 and a high pressure (or second) compressor section 22, a combustor 26, and a turbine section 21 that includes a high pressure (or second) turbine section 30 and a low pressure (or first) turbine section 34. The gas turbine engine 10 is circumferentially disposed about an engine centerline X. During operation, air is pulled into the gas turbine engine 10 by the fan section 14, pressurized by the compressors 18, 22 mixed with fuel, and burned in the combustor 26. Hot combustion gases generated within the combustor 26 flow through high and low pressure turbines 30, 34, which extract energy from the hot combustion gases. As used herein, a "high pressure" compressor or turbine experiences a higher pressure that a corresponding "low pressure" compressor or turbine.

In a two-spool design, the high pressure turbine 30 utilizes the extracted energy from the hot combustion gases to power the high pressure compressor 22 through a high speed shaft 38, and a low pressure turbine 34 utilizes the energy extracted from the hot combustion gases to power the low pressure compressor 18 and the fan section 14 through a low speed shaft 42. However, the invention is not limited to the two-spool gas turbine architecture described and may be used with other architectures such as a single-spool axial design, a three-spool axial design and other architectures. That is, there are various types of gas turbine engines, many of which could benefit from the examples disclosed herein, which are not limited to the design shown.

The example gas turbine engine 10 is in the form of a high bypass ratio turbine engine mounted within a nacelle or fan casing 46, which surrounds an engine casing 50 housing a core engine 54. A significant amount of air pressurized by the fan section 14 bypasses the core engine 54 for the generation of propulsion thrust. The airflow entering the fan section 14 may bypass the core engine 54 via a fan bypass passage 58 extending between the fan casing 46 and the engine casing 50 for receiving and communicating a discharge airflow F1. The high bypass flow arrangement provides a significant amount of thrust for powering an aircraft.

The gas turbine engine 10 may include a geartrain 62 for controlling the speed of the rotating fan section 14. The geartrain 62 can be any known gear system, such as a planetary gear system with orbiting planet gears, a planetary system with non-orbiting planet gears or other type of gear system. The low speed shaft 42 may drive the geartrain 62. In the disclosed example, the geartrain 62 has a constant gear ratio. It should be understood, however, that the above parameters are only exemplary of a contemplated geared gas turbine engine 10. That is, aspects of the invention are applicable to traditional turbine engines as well as other engine architectures.

The engine 10 in one example is a high-bypass geared aircraft engine. In a further example, the engine 10 bypass ratio is greater than about six (6), with an example embodiment being greater than ten (10), the geared architecture 62 is an epicyclic gear train, such as a planetary gear system or other gear system, with a gear reduction ratio of greater than about 2.3 and the low pressure turbine 34 has a pressure ratio that is greater than about 5. In one example, the geared architecture 62 includes a sun gear, a ring gear, and intermediate gears arranged circumferentially about the sun gear and intermeshing with the sun gear and the ring gear. The intermediate gears are star gears grounded against rotation about the axis X. The sun gear is supported by the low speed shaft 38, and the ring gear is interconnected to the fan 14.

In one disclosed embodiment, the engine 10 bypass ratio is greater than about ten (10:1), the fan diameter is significantly larger than that of the low pressure compressor 18, and the low pressure turbine 34 has a pressure ratio that is greater than about 5:1. Low pressure turbine 34 pressure ratio is pressure measured prior to inlet of low pressure turbine 34 as related to the pressure at the outlet of the low pressure turbine 34 prior to an exhaust nozzle. The geared architecture 62 may be an epicycle gear train, such as a planetary gear system or other gear system, with a gear reduction ratio of greater than about 2.3:1.

A significant amount of thrust is provided by a bypass flow through the bypass passage 58 due to the high bypass ratio. The fan section 14 of the engine 10 is designed for a particular flight condition -- typically cruise at about 0.8 Mach and about 35,000 feet. The flight condition of 0.8 Mach and 35,000 ft, with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tambient deg R) / 518.7)^0.5]. The "Low corrected fan tip speed" as disclosed herein according to one non-limiting embodiment is less than about 1150 ft / second. The above parameters for the engine 20 are intended to be exemplary.

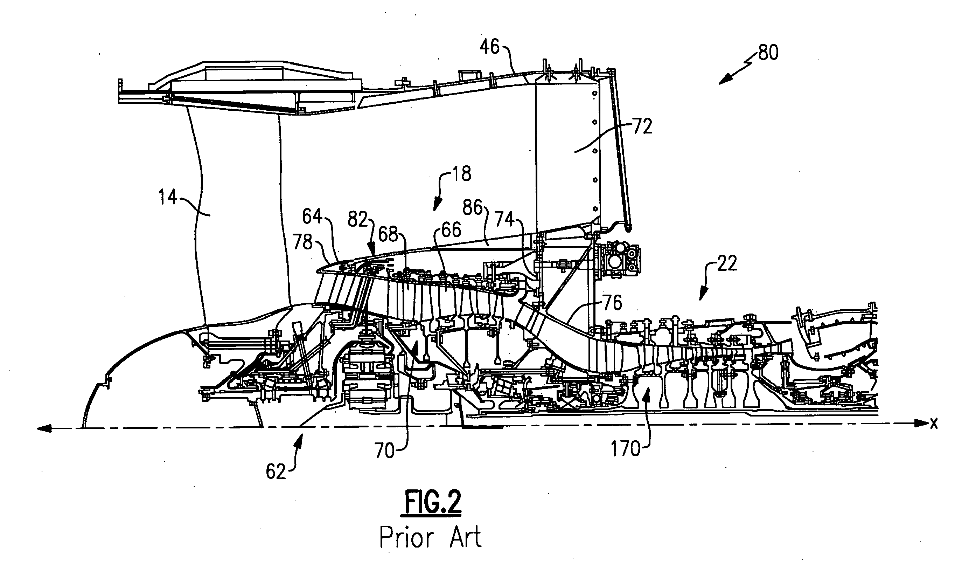

As shown in Figure 2, the example engine casing 50 generally includes at least an inlet case portion 64, a low pressure compressor case portion 66, and an intermediate case portion 76. The inlet case 64 guides air to the low pressure compressor case 66. The low pressure compressor case 66 in an example prior art gas turbine engine 80 supports a plurality of compressor stator vanes 68. Notably, the low pressure compressor section 18, and the high pressure compressor section 22, and the arrangement of the low rotor 70 and high rotor 170, respectively, are not part of the prior art. The low rotor 70 rotates about the central axis X, and, with the compressor stator vanes 68, help compress air moving through the low pressure compressor case 66. Downstream of the low pressure compressor the air, passes into the high pressure compressor section 22, and is further compressed by its rotor 170. The mounting of the compressor as shown in Figure 2 is prior art, however, the structure of the low pressure compressor section 18 and high pressure compressor section 22, and the rotors 70 and 170 were not part of the prior art.

A plurality of guide vanes 72 secure the intermediate case 76 to the fan casing 46. Formerly, the guide vanes 72 each included at least a rear attachment 74 and a forward attachment 78. The rear attachment 74 connects to an intermediate case 76 while the forward attachment 78 connects to the inlet case 64. The lower pressure compressor case 66 was thus supported through the intermediate case 76 and the inlet case 64.

In the prior art, a plumbing connection area 82 is positioned between the rear attachment 74 and the forward attachment 78. The plumbing connection area 82 includes connections used for maintenance and repair of the gas turbine engine 80, such as compressed air attachments, oil attachments, etc. The forward attachment 78 extends to the inlet case 64 from at least one of the guide vanes 72 and covers portions of the plumbing connection area 82. A fan stream splitter 86, a type of cover, typically attaches to the forward attachment 78 to shield the plumbing connection area 82.

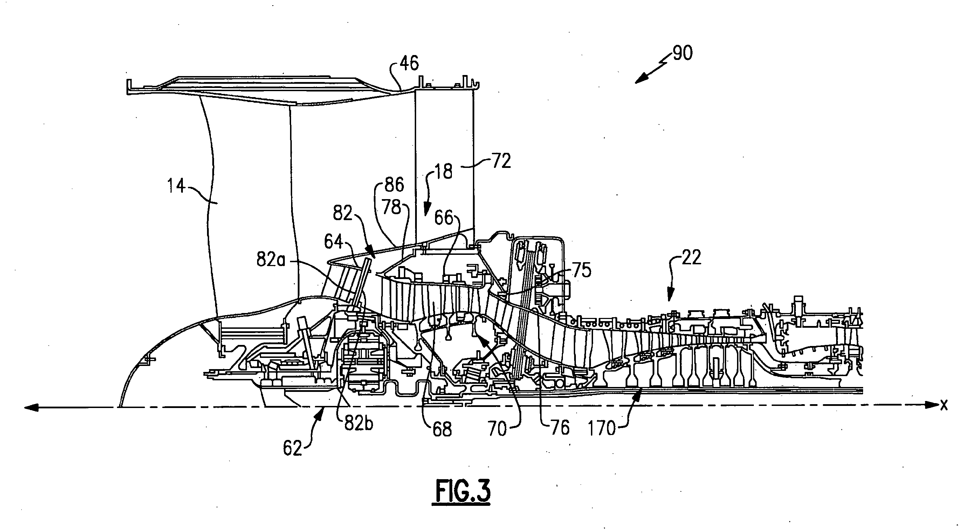

Referring now to an example of the present invention shown in Figure 3, in the turbine engine 90, the forward attachment 78 attaches to a front portion of the low pressure compressor case 66. In this example, the forward attachment 78 extends from the guide vane 72 to support the low pressure compressor case 66. Together, the forward attachment 78 and guide vane 72 act as a support member for the low pressure compressor case 66. The plumbing connection area 82 (which includes connections used for maintenance and repair of the gas turbine engine 90, such as compressed air attachments, oil attachments, etc) is positioned upstream of the forward attachment 78 facilitating access to the plumbing connection area 82. In contrast, the plumbing connection area of prior art embodiments was typically positioned between the rear attachment and the forward attachment and the forward attachment typically extended to the inlet case from at least one of the guide vanes, thereby covering portions of the plumbing connection area, which complicated access thereto; this complicated structure was further complicated by a fan stream splitter, a type of cover, that typically was attached to the forward attachment to shield the plumbing connection area.

In the embodiment shown in Figure 3, an operator may directly access the plumbing connection area 82 after removing the fan stream splitter 86. The plumbing connection area 82 typically provides access to a lubrication system 82a, a compressed air system 82b, or both. The lubrication system 82a and compressed air system 82b are typically in fluid communication with the geartrain 62.

Maintenance and repair of the geartrain 62 may require removing the geartrain 62 from the engine 90. Positioning the plumbing connection area 82 ahead of the forward attachment 78 simplifies maintenance and removal of the geartrain 62 from other portions of the engine 90. Draining oil from the geartrain 62 prior to removal may take place through the plumbing connection area 82 for example. The plumbing connection area 82 is typically removed with the geartrain 62. Thus, the arrangement may permit removing the geartrain 62 on wing or removing the inlet case 64 from the gas turbine engine 90 separately from the low pressure compressor case 66. This reduces the amount of time needed to prepare an engine for continued revenue service, saving an operator both time and money.

Connecting the forward attachment 78 to the low pressure compressor case 66 helps maintain the position of the rotor 70 relative to the interior of the low pressure compressor case 66 during fan rotation, even if the fan section 14 moves. In this example, the intermediate case 76 supports a rear portion of the low pressure compressor case 66 near a compressed air bleed valve 75.

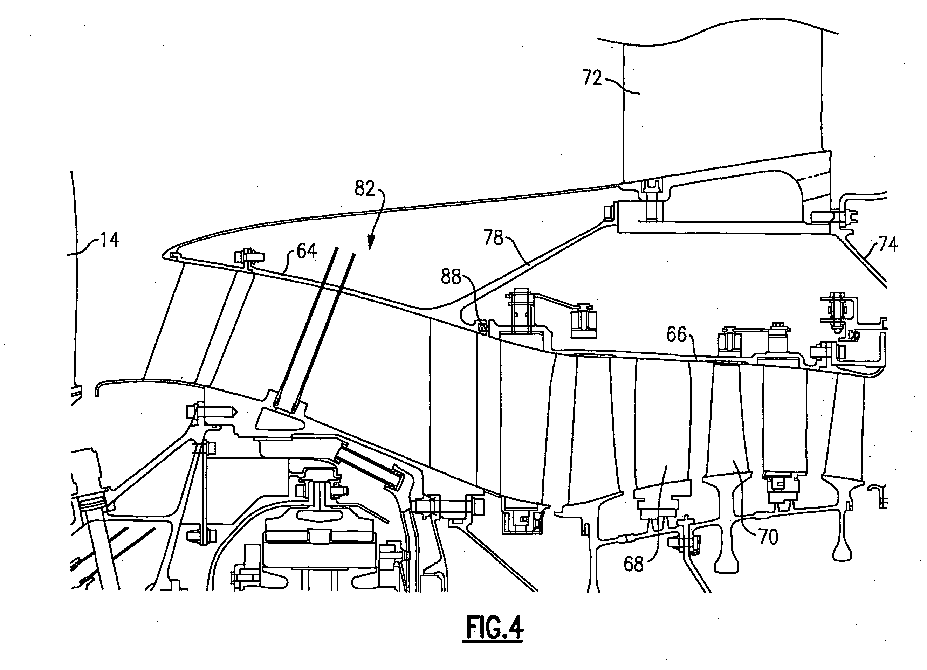

As shown in Figure 4, a seal 88, such as a "W" seal, may restrict fluid movement between the inlet case 64 and the low pressure compressor case 66. In this example, the seal 88 forms the general boundary between the inlet case 64 and the low pressure compressor case 66, while still allowing some amount of movement between the cases.

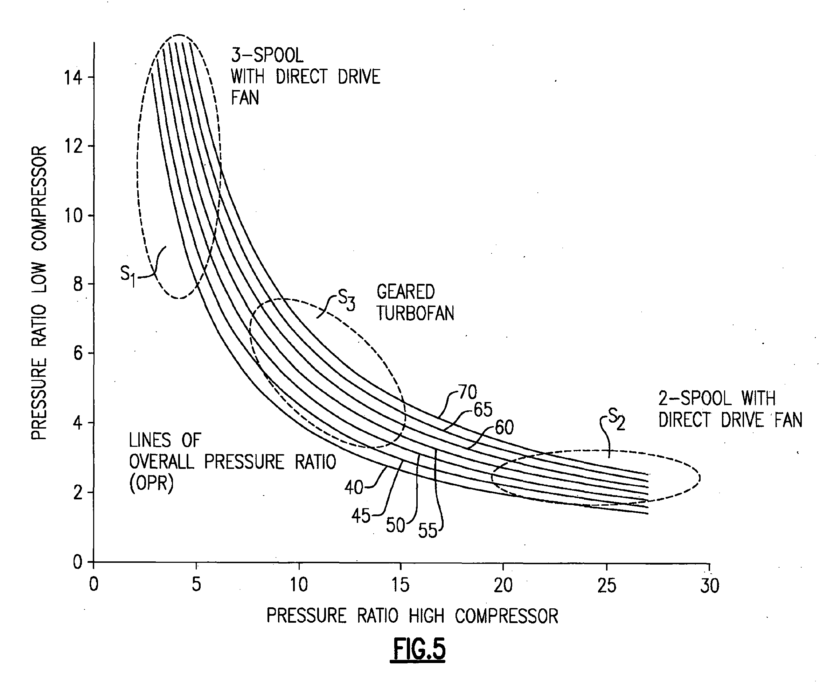

Figure 5 shows a novel worksplit that has been invented to improve the fuel burn efficiency of a geared turbofan architecture with a fan 14 connected to the low compressor 18 through a speed reduction device such as a gearbox 62. Since a gear reduction 62 is incorporated between the fan 14 and the low pressure compressor 18, the speeds of the low pressure compressor can be increased relative to a traditional two spool direct drive arrangement. This provides freedom in splitting the amount of compression between the low pressure section 18 and the high pressure section 22 that can be uniquely exploited to improve fuel burn efficiency on the geared turbofan architecture described in Figures 1 and 2. This resulting worksplit is distinctly different from historical two and three spool direct drive architectures as shown in Figure 5.

Notably, while the gear train 62 is shown axially adjacent to the fan 14, it could be located far downstream, and even aft of the low turbine section 34. As is known, the gear illustrated at 62 in Figures 2 and 3 could result in the fan 14 rotating in the same, or the opposite direction of the compressor rotors 70 and 170.

It is known in prior art that an overall pressure ratio (when measured at sea level and at a static, full-rated takeoff power) of at least 35:1 is desirable, and that an overall pressure ratio of greater than about 40:1 and even about 50:1 is more desirable. That is, after accounting for the fan 14 pressure rise in front of the low pressure compressor 18, the pressure of the air entering the low compressor section 18 should be compressed as much or over 35 times by the time it reaches the outlet of the high compressor section 22. This pressure rise through the low and high compressors will be referred to as the gas generator pressure ratio.

Figure 5 shows the way that this high pressure ratio has been achieved in the two prior art engine types versus the Applicant's engine's configuration.

Area S₁ shows the typical operation of three spool arrangements discussed the Background Section. The pressure ratio of the low compressor (i.e., the pressure at the exit of the low pressure compressor divided by the pressure at the inlet of the low pressure compressor) is above 8, and up to potentially 15. That is, if a pressure of 1 were to enter the low pressure compressor, it would be compressed between 8 to 15 times.

As can be further seen, the high pressure compressor ratio (i.e., the pressure at the exit of the high pressure compressor divided by the pressure at the inlet of the high pressure compressor) in this arrangement need only compress a very low pressure ratio, and as low as 5 to achieve a combined gas generator pressure ratio of above 35. For example, if the low pressure compressor ratio is 10 and the high pressure compressor ratio is 3.5, the combined overall pressure ratio ("OPR") would be (10)(3.5) = 35. In addition, the three spool design requires complex arrangements to support the three concentric spools.

Another prior art arrangement is shown at area S₂. Area S₂ depicts the typical pressure ratio split in a typical two spool design with a direct drive fan. As can be seen, due to the connection of the fan directly to the low pressure compressor, there is little freedom in the speed of the low pressure compressor. Thus, the low pressure compressor can only do a small amount of the overall compression. As shown, it is typically below 4 times. On the other hand, the high pressure compressor must provide an amount of compression typically more than 20 times to reach an OPR of 40 (or 50).

The S₂ area results in undesirably high stress on the high pressure compressor, which, in turn, yields challenges in the mounting of the high pressure spool. In other words, the direct drive system that defines the S₂ area presents an undesirable amount of stress, and an undesirable amount of engineering required to properly mount the high pressure spool to provide such high pressure ratios.

Applicant's current low compressor/high compressor pressure split is shown at area S₃. The fan is driven at a speed distinct from the low pressure compressor, and a higher compression ratio can be achieved at the low pressure compressor section than was the case at area S₂. Thus, as shown, the pressure ratio across the low pressure turbine may be between 4 and 8. This allows the amount of compression to be performed by the high pressure compressor to only need to be between 8 times and 15 times.

The area S₃ is an enabling design feature that allows the geared turbofan architecture shown in Figures 1 and 2 to achieve a very high gas generator OPR while avoiding the complexities of historical three spool and two spool direct drive architectures. The area S₃ is an improvement over both areas S₁ and S₂. As an example, a 3-4% fuel efficiency is achieved at area S₃ compared to area S₁. A fuel savings of 4-5% is achieved at area S₃, compared to area S₂.

In fact, in comparison to a gas turbine engine provided with a gear drive, but operating in the pressure ratios of area S₂, there is still a 2% fuel burn savings at the S₃ area.

As such, the area S₃ reduces fuel burn, and provides engineering simplicity by more favorably distributing work between the hotter high pressure spools and colder low pressure spools.

Stated another way, the present invention provides a combination of a low pressure compressor and a high pressure compressor which together provides an OPR of greater than about 35 and, in some embodiments greater than about 40, in some embodiments greater than about 50, and in some embodiments up to about 70. This high OPR is accomplished by a beneficial combination of a pressure ratio across the low pressure compressor of between about 4 and about 8 coupled with an additional pressure ratio across the high pressure ratio compressor of between about 8 and about 15.

Improved fuel consumption can be further achieved wherein the fan may be low pressure, and have a pressure ratio less than or equal to about 1.45. A bypass ratio, defined as the volume of air passing into bypass passage 58 compared to the volume of air in the core air flow is greater than or equal to about 8 at cruise power. The low pressure compressor may have a pressure ratio of between 3 to 8 and more narrowly 4 to 6, and be powered by a 4 or 5-stage low pressure turbine. The high compressor rotor may have a nominal pressure ratio of between 7 to 15, and more narrowly 8 to 10, and may be powered by a 2-stage high pressure turbine. A gas turbine engine operating with these operational parameters provides benefits compared to the prior art.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A gas turbine engine (10) comprising:
a fan section (14); and
a compressor section (19), including both a low pressure compressor section (18) and a high pressure compressor section (22), wherein said fan section (14) is configured to deliver a portion of air into said compressor section (19), and a portion of air into a bypass duct (58), **characterised in that**:
the engine (10) further comprises:
a gear arrangement (62) configured to drive the fan section (14); and
a turbine section (21) configured to drive the compressor section and the gear arrangement (62); and
the engine (10) is configured that that, when measured at sea level and at a static, full-rated take off power, the overall pressure ratio, provided by the combination of a pressure ratio across said low pressure compressor section (18) and a pressure ratio across said high pressure compressor section (22), is greater than 35, the pressure ratio across said low pressure compressor section (18) is between 3 and 8 and the pressure ratio across said high pressure compressor section (22) is between 7 and 15.

2. The gas turbine engine (10) as set forth in claim 1, wherein said pressure ratio across said low pressure compressor section (18) is between about 4 and about 8, or between about 4 and about 6.

3. The gas turbine engine (10) as set forth in claim 1, wherein said pressure ratio across said high pressure compressor section (22) is between about 8 and about 15, or between about 8 and about 10.

4. The gas turbine engine (10) as set forth in claim 1, wherein said overall pressure ratio is above or equal to about 50.

5. The gas turbine engine (10) as set forth in claim 1, wherein a bypass ratio which is defined as a volume of air passing to said bypass duct (58) compared to a volume of air passing into the compressor section (19) being greater than or equal to about 8.

6. The gas turbine engine (10) as set forth in claim 1, wherein the turbine section (21) includes a low pressure turbine (34) having 4 or 5 stages, and wherein the low pressure turbine (34) drives the low pressure compressor section (18).

7. The gas turbine engine (10) as set forth in claim 1, wherein the turbine section (21) includes a two-stage high pressure turbine (30), and wherein the high pressure turbine (30) drives the high pressure compressor section (22).

8. The gas turbine engine (10) as set forth in claim 1, wherein a pressure ratio across said fan section (14) is less than or equal to about 1.45.

9. The gas turbine engine (10) of any preceding claim, further comprising:
a fan section (14) having a central axis (X);
a compressor case (66, 76) for housing the compressor section (19);
an inlet case (64) for guiding air to said compressor section (19), said compressor case (66, 76) being positioned axially further from said fan section (14) than said inlet case (64); and
a support member (78) extending between said fan section (14) and said compressor case (66, 76) wherein said support member (78) restricts movement of said compressor case (66, 76) relative to said inlet case (64); said compressor case includes an upstream compressor case portion (66) and a downstream compressor case portion (76), said downstream compressor case portion (76) being axially further from said inlet case (64) than said upstream compressor case portion (66), wherein said support member (78) extends between said fan section (14) and said upstream compressor case portion (66), and said inlet case (64) is removable from said gas turbine engine (10) separately from said compressor case (66, 76).

## Patentansprüche

1. Gasturbinentriebwerk (10), umfassend:
einen Gebläseabschnitt (14); und
einen Kompressorabschnitt (19) mit sowohl einem Niederdruckkompressorabschnitt (18) als auch einem Hochdruckkompressorabschnitt (22), wobei der Gebläseabschnitt (14) dazu konfiguriert ist, einen Teil der Luft in den Kompressorabschnitt (19) und einen Teil der Luft in eine Umgehungsleitung (58) zu leiten, **dadurch gekennzeichnet, dass**:
das Triebwerk (10) ferner Folgendes umfasst:
eine Getriebeanordnung (62), die dazu konfiguriert ist, den Gebläseabschnitt (14) anzutreiben; und
einen Turbinenabschnitt (21), der dazu konfiguriert ist, den Kompressorabschnitt und die Getriebeanordnung (62) anzutreiben; und
das Triebwerk (10) dazu konfiguriert ist, dass bei Messung auf Meeresspiegelhöhe und einer statischen vollen Abhebeleistung das Gesamtdruckverhältnis, das durch die Kombination eines Druckverhältnisses am Niederdruckkompressorabschnitt (18) und eines Druckverhältnisses am Hochdruckkompressorabschnitt (22) bereitgestellt wird, größer als 35 ist, das Druckverhältnis am Niederdruckkompressorabschnitt (18) zwischen 3 und 8 ist und das Druckverhältnis am Hochdruckkompressorabschnitt (22) zwischen 7 und 15 ist.

2. Gasturbinentriebwerk (10) nach Anspruch 1, wobei das Druckverhältnis am Niederdruckkompressorabschnitt (18) zwischen etwa 4 und etwa 8 oder zwischen etwa 4 und etwa 6 ist.

3. Gasturbinentriebwerk (10) nach Anspruch 1, wobei das Druckverhältnis am Hochdruckkompressorabschnitt (22) zwischen etwa 8 und etwa 15 oder zwischen etwa 8 und etwa 10 ist.

4. Gasturbinentriebwerk (10) nach Anspruch 1, wobei das Gesamtdruckverhältnis über oder gleich etwa 50 ist.

5. Gasturbinentriebwerk (10) nach Anspruch 1, wobei ein Umgehungsverhältnis, das als ein Volumen von Luft, die zu der Umgehungsleitung (58) strömt, im Vergleich zu einem Volumen von Luft, die in den Kompressorabschnitt (19) strömt, größer oder gleich etwa 8 ist.

6. Gasturbinentriebwerk (10) nach Anspruch 1, wobei der Turbinenabschnitt (21) eine Niederdruckturbine (34) mit 4 oder 5 Stufen aufweist und wobei die Niederdruckturbine (34) den Niederdruckkompressorabschnitt (18) antreibt.

7. Gasturbinentriebwerk (10) nach Anspruch 1, wobei der Turbinenabschnitt (21) eine zweistufige Hochdruckturbine (30) aufweist und wobei die Hochdruckturbine (30) den Hochdruckkompressorabschnitt (22) antreibt.

8. Gasturbinentriebwerk (10) nach Anspruch 1, wobei ein Druckverhältnis am Gebläseabschnitt (14) kleiner oder gleich etwa 1,45 ist.

9. Gasturbinentriebwerk (10) nach einem der vorangehenden Ansprüche, ferner umfassend:
einen Gebläseabschnitt (14) mit einer Mittelachse (X);
ein Kompressorgehäuse (66, 76) zum Aufnehmen des Kompressorabschnitts (19);
ein Einlassgehäuse (64) zum Lenken von Luft zu dem Kompressorabschnitt (19), wobei das Kompressorgehäuse (66, 76) axial weiter von dem Gebläseabschnitt (14) angeordnet ist als das Einlassgehäuse (64); und
ein Tragelement (78), das sich zwischen dem Gebläseabschnitt (14) und dem Kompressorgehäuse (66, 76) erstreckt, wobei das Tragelement (78) die Bewegung des Kompressorgehäuses (66, 76) relativ zum Einlassgehäuse (64) einschränkt; wobei das Kompressorgehäuse einen stromaufwärtigen Kompressorgehäuseabschnitt (66) und einen stromabwärtigen Kompressorgehäuseabschnitt (76) aufweist, wobei der stromabwärtige Kompressorgehäuseabschnitt (76) axial weiter von dem Einlassgehäuse (64) als der stromaufwärtige Kompressorgehäuseabschnitt (66) ist, wobei sich das Tragelement (78) zwischen dem Gebläseabschnitt (14) und dem stromaufwärtigen Kompressorgehäuseabschnitt (66) erstreckt und das Einlassgehäuse (64) separat von dem Kompressorgehäuse (66, 76) aus dem Gasturbinentriebwerk (10) entfernt werden kann.

## Revendications

1. Moteur à turbine à gaz (10) comprenant :
une section de soufflante (14) ; et
une section de compresseur (19), incluant à la fois une section de compresseur basse pression (18) et une section de compresseur haute pression (22), dans lequel ladite section de soufflante (14) est configurée pour délivrer une portion d'air dans ladite section de compresseur (19), et une portion d'air dans un conduit de dérivation (58), **caractérisé en ce que** :
le moteur (10) comprend en outre :
un agencement d'engrenage (62) configuré pour entraîner la section de soufflante (14) ; et
une section de turbine (21) configurée pour entraîner la section de compresseur et l'agencement d'engrenage (62) ; et
le moteur (10) est configuré de sorte que, lorsqu'il est mesuré au niveau de la mer et à une puissance de décollage statique à plein régime, le rapport de pression global, fourni par la combinaison d'un rapport de pression à travers ladite section de compresseur basse pression (18) et d'un rapport de pression à travers ladite section de compresseur haute pression (22), soit supérieur à 35, le rapport de pression à travers ladite section de compresseur basse pression (18) soit compris entre 3 et 8, et le rapport de pression à travers ladite section de compresseur haute pression (22) soit compris entre 7 et 15.

2. Moteur à turbine à gaz (10) selon la revendication 1, dans lequel ledit rapport de pression à travers ladite section de compresseur basse pression (18) est compris entre environ 4 et environ 8, ou entre environ 4 et environ 6.

3. Moteur à turbine à gaz (10) selon la revendication 1, dans lequel ledit rapport de pression à travers ladite section de compresseur haute pression (22) est compris entre environ 8 et environ 15, ou entre environ 8 et environ 10.

4. Moteur à turbine à gaz (10) selon la revendication 1, dans lequel ledit rapport de pression global est supérieur ou égal à environ 50.

5. Moteur à turbine à gaz (10) selon la revendication 1, dans lequel un taux de dilution qui est défini comme un volume d'air passant vers ledit conduit de dérivation (58) comparé à un volume d'air passant dans la section de compresseur (19) est supérieur ou égal à environ 8.

6. Moteur à turbine à gaz (10) selon la revendication 1, dans lequel la section de turbine (21) inclut une turbine basse pression (34) ayant 4 ou 5 étages, et dans lequel la turbine basse pression (34) entraîne la section de compresseur basse pression (18).

7. Moteur à turbine à gaz (10) selon la revendication 1, dans lequel la section de turbine (21) inclut une turbine haute pression à deux étages (30), et dans lequel la turbine haute pression (30) entraîne la section de compresseur haute pression (22).

8. Moteur à turbine à gaz (10) selon la revendication 1, dans lequel un rapport de pression à travers ladite section de soufflante (14) est inférieur ou égal à environ 1,45.

9. Moteur à turbine à gaz (10) selon l'une quelconque des revendications précédentes, comprenant en outre :
une section de soufflante (14) ayant un axe central (X) ;
un carter de compresseur (66, 76) pour loger la section de compresseur (19) ;
un carter d'entrée d'air (64) pour guider l'air vers ladite section de compresseur (19), ledit carter de compresseur (66, 76) étant positionné plus éloigné axialement de ladite section de soufflante (14) que ledit carter d'entrée d'air (64) ; et
un organe de support (78) s'étendant entre ladite section de soufflante (14) et ledit carter de compresseur (66, 76), dans lequel ledit organe de support (78) limite un mouvement dudit carter de compresseur (66, 76) par rapport audit carter d'entrée d'air (64) ; ledit carter de compresseur inclut une portion de carter de compresseur amont (66) et une portion de carter de compresseur aval (76), ladite portion de carter de compresseur aval (76) étant plus éloignée axialement dudit carter d'entrée d'air (64) que ladite portion de carter de compresseur amont (66), dans lequel ledit organe de support (78) s'étend entre ladite section de soufflante (14) et ladite portion de carter de compresseur amont (66), et ledit carter d'entrée d'air (64) est amovible dudit moteur à turbine à gaz (10) séparément dudit carter de compresseur (66, 76).
